(19) Europäisches Patentamt / European Patent Office / Office européen des brevets

(11) **EP 1 672 444 B1**

(12) **FASCICULE DE BREVET EUROPEEN**

(45) Date de publication et mention
de la délivrance du brevet:
**10.10.2007 Bulletin 2007/41**

(51) Int Cl.:
***G05B 17/02*** *(2006.01)*

(21) Numéro de dépôt: **05300970.0**

(22) Date de dépôt: **28.11.2005**

(54) **Procédé de suivi des performances d'un équipement industriel**

Verfahren zur Überwachung der Betriebsleistungen einer Industrieanlage

Procedure for monitoring the performance of an industrial facility

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **16.12.2004 FR 0453027**

(43) Date de publication de la demande:
**21.06.2006 Bulletin 2006/25**

(73) Titulaire: **L'AIR LIQUIDE, Société Anonyme pour l'Etude
et l'Exploitation des Procédés Georges Claude
75007 Paris (FR)**

(72) Inventeurs:
• **Donzel, Alain
78350 Jouy en Josas (FR)**
• **Drouart, Caroline
92320 Chatillon (FR)**
• **Roba, Thierry
5310 Boneffe (BE)**

(74) Mandataire: **Ducreux, Marie et al
L'Air Liquide,
Service Propriété Industrielle,
75 Quai d'Orsay
75321 Paris Cedex 07 (FR)**

(56) Documents cités:
**FR-A- 2 837 598          FR-A- 2 839 285**

**Description**

La présente invention concerne un procédé de suivi des performances d'un équipement industriel, ainsi qu'un dispositif de mise en oeuvre d'un tel procédé.

L'invention s'applique en particulier aux unités de séparation des composants de l'air, utilisant au moins compresseur d'air, d'oxygène ou d'azote.

Le suivi des performances d'un équipement industriel, en particulier d'un compresseur, sert à planifier la maintenance de celui-ci et à surveiller son efficacité, et à orienter le choix opératoire vers les équipements les plus performants.

Il est souhaitable pour l'exploitant de cet équipement industriel de disposer d'un indicateur de performance de cet équipement, permettant de détecter de façon fiable toute dégradation de celui-ci.

Ainsi, cet indicateur doit permettre de différencier une dégradation de l'état de l'équipement industriel et une simple variation des conditions de fonctionnement.

A cet effet, le document FR 2 837 598 de la déposante décrit un procédé et un dispositif de suivi dans lequel l'indicateur de performance de l'équipement est en particulier la puissance électrique consommée. Ainsi, le procédé consiste à comparer la mesure de puissance électrique consommée par un équipement à un modèle de cette puissance consommée. Lorsque le ratio entre ces deux grandeurs est supérieur à un seuil, une alarme de surconsommation est déclenchée.

Le modèle utilisé peut être de type linéaire ou non linéaire.

La calibration du modèle est aujourd'hui en général effectuée sur un ensemble de données rassemblées sur une période de 3 mois.

Le diagnostic de surconsommation peut se baser sur un modèle devenu inadéquat à l'instant de diagnostic, si le comportement statistique de l'ensemble des mesures des variables d'entrée du modèle change par rapport à la période de calibration. Ces variables comprennent en particulier la température du gaz et de l'eau réfrigérante, les pressions d'aspiration et de refoulement, et le débit de gaz.

Ce changement de comportement peut donc induire des diagnostics erronés, et induire une absence de détection d'une surconsommation, ou une fausse détection de surconsommation, ce dernier cas étant le plus fréquent.

Le changement du comportement statistique des mesures peut être dû par exemple à des conditions saisonnières extrêmes, la température extérieure pouvant par exemple être soumise à des variations importantes, à un changement au niveau de l'équipement ou à une dérive importante d'un capteur.

Le procédé décrit dans le document FR 2 837 598 ne prend pas en compte ces changements statistiques, ce qui occasionne un taux de fausse alarme élevé, entraînant des actions inadéquates de maintenance ou l'augmentation par les utilisateurs du seuil de détection, ce qui diminue l'efficacité de l'outil.

Le but de la présente invention est l'amélioration de la fiabilité des diagnostics de surconsommation des compresseurs en tenant compte des changements du comportement statistique des mesures utilisées en entrée du modèle, en particulier les mesures de température du gaz et de l'eau réfrigérante, des pressions d'aspiration et de refoulement, et du débit de gaz.

Ainsi l'invention a pour but de fournir un indicateur de surconsommation, mais également un indicateur d'invalidité pour suggérer un réapprentissage à l'opérateur, prenant en compte ces changements.

Un autre but de l'invention est la mise à disposition d'informations supplémentaires utiles aux utilisateurs pour la gestion du parc de compresseurs, en particulier pour faciliter le choix des équipements à utiliser ou la charge relative de chacun d'eux, en fournissant un indicateur de sélection des compresseurs.

A cet effet, la présente invention a pour objet un procédé de suivi des performances d'un équipement industriel, dans lequel lors d'une phase d'apprentissage, sur une période de référence :

- on calibre un modèle, destiné à fournir une estimation de la puissance électrique consommée à partir des valeurs de l'ensemble des paramètres de fonctionnement de l'équipement industriel,
- on calibre la distribution d'une variable aléatoire représentant la surconsommation, c'est-à-dire l'écart entre la mesure de la puissance électrique et la valeur estimée à partir du modèle, et
  lors d'une phase de suivi en temps réel :

- on mesure un ensemble de paramètres de fonctionnement de l'équipement industriel, ainsi que la valeur de la puissance électrique consommée de l'équipement,
- on calcule, en temps réel, en utilisant le modèle, à partir des valeurs de l'ensemble des paramètres de fonctionnement de l'équipement industriel, une estimation de la grandeur représentant la puissance électrique consommée,
- on compare l'écart entre la valeur mesurée de la puissance électrique consommée avec la valeur estimée fournie par le modèle, pour obtenir la valeur de la surconsommation.
- à partir d'un test statistique sur la variable surconsommation, utilisant la distribution de cette variable, on en déduit un score de surconsommation correspondant à une probabilité de surconsommation et constituant un indicateur de surconsommation,
- on déclenche une alarme si la probabilité de surconsommation dépasse un seuil de probabilité de surconsommation donné.

Ces dispositions permettent d'augmenter la robustesse du diagnostic et ainsi diminuer le taux de fausse alarme.

Avantageusement, le score permettant le calcul de la probabilité de surconsommation correspond à la puissance d'un test statistique sur la variable surconsommation.

Selon un mode de mise en oeuvre, la probabilité de surconsommation correspond à la probabilité que la surconsommation dépasse un seuil donné.

Avantageusement, on calcule, lors de la phase de suivi en temps réel un indicateur d'invalidité représentant la probabilité de validité ou l'invalidité du modèle, à partir des valeurs de l'ensemble des paramètres de fonctionnement de l'équipement industriel, l'indicateur d'invalidité étant calculé à partir d'un score dont les moyens de détermination sont calibrés lors d'une phase d'apprentissage sur une période de référence.

L'indicateur d'invalidité ou de réapprentissage sert à indiquer à l'opérateur la nécessité d'un réapprentissage, par exemple à travers une alarme.

Selon un mode de mise en oeuvre, une alarme est déclenchée si l'indicateur d'invalidité dépasse un seuil de probabilité d'invalidité donné.

Avantageusement, lors de la phase de suivi en temps réel, un indicateur de sélection des équipements est calculé comme le coût marginal de l'équipement, c'est-à-dire l'augmentation de la puissance électrique consommée pour une augmentation unité du débit comprimé au point de fonctionnement actuel, cet indicateur étant calculé par une dérivation numérique sur le modèle.

L'indicateur de sélection sert à l'opérateur pour déterminer les meilleurs équipements à utiliser.

Les coûts marginaux associés à chacun des compresseurs d'une installation permettent d'améliorer le choix d'utilisation de ceux-ci.

Selon un mode de mise en oeuvre, on prend en compte au moins une fenêtre temporelle glissante de mesure, contenant des informations mesurées pendant la durée de la fenêtre jusqu'à l'instant courant, pour déterminer la surconsommation et/ou l'invalidité du modèle.

Avantageusement, le modèle est de type non linéaire, comportant en particulier au moins un réseau de neurones ou des outils de régression locale.

Selon un mode de mise en oeuvre, l'ensemble des variables d'entrée du modèle, comprend :

- le débit du gaz à travers l'équipement,
- la pression d'aspiration
- la pression de refoulement,
- la température de l'eau réfrigérante, et
- la température du gaz à l'entrée de l'équipement.

L'invention a également pour objet un système permettant de mettre en oeuvre le procédé ci-dessus, comportant :

- des moyens de mesure sur l'équipement,
- des moyens de stockage permettant d'enregistrer les données correspondantes,

- des moyens de calcul,
- des moyens d'information d'un opérateur et de contrôle,
- des moyens de communication en réseau reliant les composants du système.

Avantageusement, on déclenche une recalibration du modèle en cas d'invalidité.

Selon un mode de réalisation, le procédé est réalisé à intervalle régulier, en particulier de façon horaire.

De toute façon, l'invention sera bien comprise à l'aide de la description qui suit, en référence au dessin schématique annexé, représentant à titre d'exemple non limitatif, un mode de réalisation d'un système selon l'invention.

La figure 1 représente de façon schématique un équipement ainsi qu'un dispositif de suivi selon l'invention.

La figure 2 est une vue schématique de l'agencement des moyens de calcul.

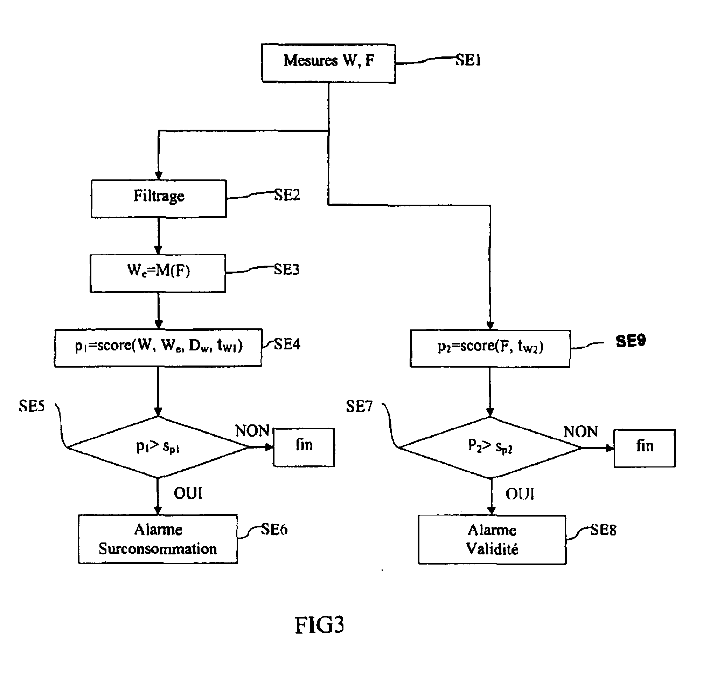

La figure 3 représente de façon schématique l'organigramme d'un procédé selon l'invention, lors de la phase de suivi.

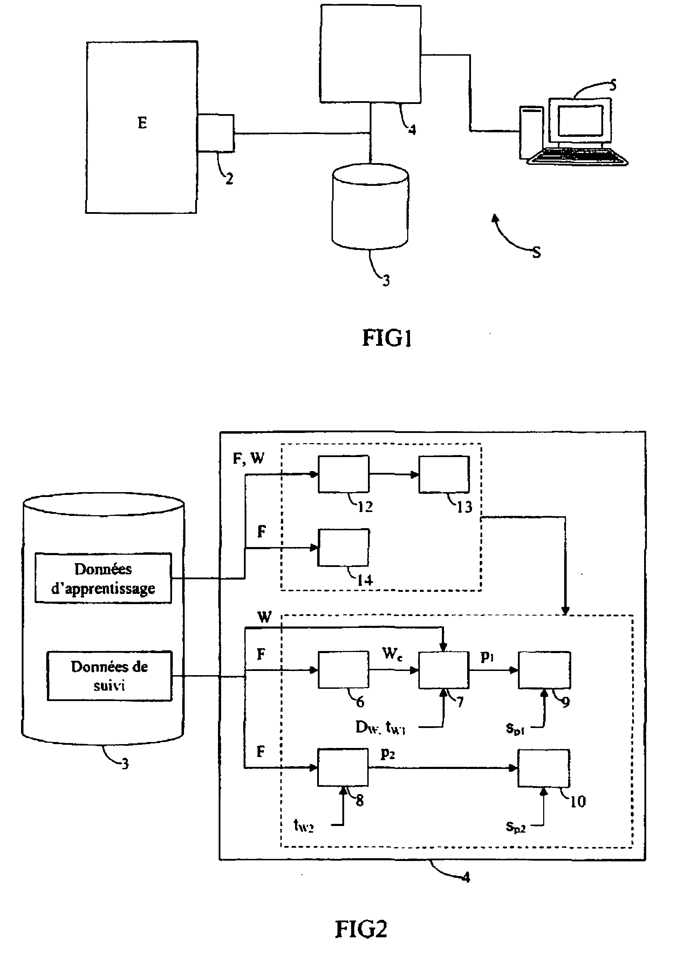

Selon un mode de réalisation représenté sur la figure 1, un équipement industriel E de type compresseur réfrigéré est associé à un système S de suivi des performances d'un équipement industriel selon l'invention.

Un compresseur réfrigéré prend en entrée un gaz à une pression d'aspiration $P_{in}$, et le comprime pour obtenir en sortie un gaz à une pression $P_{out}$ de refoulement supérieure à la pression d'aspiration.

Le gaz est à une température $T_g$.

Ce compresseur est de plus réfrigéré par un liquide de refroidissement, en particulier de l'eau, à une température $T_w$. Ce compresseur consomme pour réaliser la compression de l'énergie électrique caractérisée par une puissance consommée W.

Le système S comporte des moyens de mesures 2 positionnés sur l'équipement E effectuant des mesures. Des moyens de stockage 3 permettent d'enregistrer les données correspondantes, en particulier sous forme de moyennes horaires.

Les mesures incluent en particulier des mesures de la puissance électrique consommée W, ainsi qu'un ensemble de paramètres de fonctionnement de l'équipement E.

Le système S comprend également des moyens de calcul 4.

Le système S comporte en outre des moyens d'information d'un opérateur et de contrôle, sous forme par exemple d'un terminal informatique 5.

Les composants du système sont reliés par des moyens de communication en réseau.

La figure 2 permet d'illustrer les éléments utilisés au sein des moyens de calcul 4.

Les moyens de calcul 4 comportent :

- des moyens d'estimation 6 de la valeur de la puissance électrique consommée $W_e$ par un modèle M, utilisant un modèle comportemental, ou statistique pour calculer, à partir d'un ensemble F de variables d'entrée, une estimation $W_e$ de la puissance électrique consommée.
- des premiers moyens de détermination 7 d'un score $p_1$ correspondant à la probabilité de surconsommation, à partir de l'estimation $W_e$ de la puissance électrique consommée, de la valeur de la puissance consommée W mesurée par les moyens de mesure 2, d'un premier seuil de surconsommation Dw, et d'une première fenêtre temporelle glissante de surconsommation $t_{w1}$ sur laquelle le premier seuil doit être atteint pour caractériser une surconsommation,
- des seconds moyens de détermination 8 d'un score $p_2$ correspondant à la probabilité d'invalidité du modèle, à partir des valeurs mesurées pour les variables d'entrées du modèle, et d'une seconde fenêtre temporelle glissante $t_{w2}$,
- des premier moyens d'alarme 9 de surconsommation, comparant le premier score $p_1$ correspondant à la probabilité de surconsommation à un premier seuil de probabilité de surconsommation $S_{p1}$ et
- des seconds moyens d'alarme 10 d'invalidité du modèle M, comparant le second score $p_2$ correspondant à la probabilité d'invalidité du modèle à un second seuil de probabilité d'invalidité $S_{p2}$, ces éléments étant utilisés lors de la phase de suivi de la performance de l'équipement.

Il est à signaler qu'en particulier les premiers moyens de détermination 7 d'un score $p_1$ correspondant à la probabilité de surconsommation et les seconds moyens de détermination 8 d'un score $p_2$ correspondant à la probabilité d'invalidité du modèle peuvent être réalisés en configurant des composants de calcul de score de la suite logicielle MdIntelligence de la société Miriad Technologies.

Le modèle M est de préférence de type non linéaire, comportant selon des variantes au moins un réseau de neurones ou des outils de régression locale. Ce modèle est calibré lors d'une phase préalable d'apprentissage sur une période de référence.

L'ensemble F des variables d'entrée du modèle M, dont les valeurs sont obtenues par les moyens de mesure 2, comprennent en particulier, dans ce mode de réalisation :

- le débit Q du gaz à travers l'équipement E,
- la pression $P_{in}$ d'aspiration
- la pression $P_{out}$ de refoulement,
- la température $T_w$ de l'eau réfrigérante, et
- la température $T_G$ du gaz.

Ainsi le calcul de l'estimation de la puissance consommée peut être représentée par la relation :

$$We = M(F) = M(Q, P_{in}, P_{out}, T_w, T_g)$$

Les moyens de calcul comprennent également :

- des moyens de calibration 12 du modèle M, à partir des valeurs de l'ensemble F des variables d'entrée mesurées pendant une période de référence d'apprentissage, et de la valeur W de la puissance consommée mesurée,
- des premiers moyens de calibration 13 des premiers moyens 7 de détermination du premier score $p_1$, à partir des valeurs de puissance consommée de la période de référence d'apprentissage, et
- des seconds moyens de calibration 14 des seconds moyens 8 de détermination du second score $p_2$, à partir des valeurs de l'ensemble F des variables d'entrée mesurées pendant une période de référence d'apprentissage, les moyens de calibration étant utilisés lors de la phase d'apprentissage.

En variante, les moyens de calcul 4 comprennent de plus des moyens de filtrage de données permettant de supprimer, lors de la phase d'apprentissage ou lors de phases de suivi temps réel, les données correspondant à des données de capteur erronées.

Lors d'une phase d'apprentissage, la calibration du modèle et des moyens de détermination est réalisée, par les moyens de calibration 9, 10, 12.

Lors d'une telle phase d'apprentissage, on élimine les données correspondant à des surconsommations afin d'obtenir un modèle le plus proche du fonctionnement nominal de l'équipement.

Lors d'une phase de suivi, les étapes suivantes sont réalisées :

Dans une première étape SE1, la valeur de l'ensemble F des variables d'entrées du modèle M et de la consommation W sont fournies par les moyens de mesure 2, directement, ou par l'intermédiaire des moyens de stockage 3.

Dans une seconde étape SE2, les données fournies sont filtrées par les moyens de filtrage.

Dans une troisième étape SE3, en prenant en compte la valeur de l'ensemble F des variables d'entrées, le modèle M calcule une estimation $W_e$ de la puissance électrique consommée par l'équipement.

Dans une quatrième étape SE4, il est ensuite possible de calculer, par les premiers moyens de détermination 7, un score $p_1$ correspondant à la probabilité de surconsommation, à partir de l'estimation $W_e$ de la puissance électrique consommée, de la valeur de la puissance consommée W mesurée par les moyens de mesure 2, d'un premier seuil de surconsommation $D_w$ et d'une première fenêtre temporelle de surconsommation $t_{W1}$ sur laquelle le premier seuil doit être atteint pour caractériser une surconsommation.

Dans une cinquième étape SE5, le premier score $p_1$ correspondant à la probabilité de surconsommation est comparé à un premier seuil de probabilité de surconsommation $S_{p1}$, par les premiers moyens d'alarme 9 de surconsommation.

Dans une sixième étape SE6, si le premier score $p_1$ dépasse ce premier seuil $S_{p1}$, une surconsommation est détectée et une alarme informe l'utilisateur.

En parallèle aux étapes SE2 à SE6, Dans une septième étape SE7, le second score $p_2$ correspondant à la probabilité d'invalidité du modèle est calculé à partir de l'ensemble des variables F, et d'une seconde fenêtre temporelle glissante $t_{w2}$.

Dans une huitième étape SE8, le second score $p_2$ comparé à un second seuil de probabilité d'invalidité $S_{p2}$, par les seconds moyens d'alarme 10 d'invalidité du modèle M.

Dans une neuvième étape SE9, si le second score $p_2$ dépasse ce second seuil $S_{p2}$, une invalidité du modèle est détectée et une alarme en informe l'utilisateur, pour inciter celui-ci à réaliser un nouvel apprentissage.

Dans une dixième étape facultative, non représentée sur la figure 2, l'utilisateur peut engager une nouvelle phase d'apprentissage ou de recalibration pour obtenir un modèle valide.

Ainsi, le diagnostic de surconsommation est établi par l'intermédiaire d'un premier score $p_1$, c'est-à-dire une valeur réelle de probabilité comprise entre 0 et 1, un score de 0 indiquant un risque nul de surconsommation; un score de 1 indiquant un risque élevé de surconsommation.

La notion de surconsommation est définie, sur une plage horaire, au delà d'un seuil $S_{p1}$ de probabilité de surconsommation fixé par l'utilisateur.

Dans ce mode de mise en oeuvre, une modélisation de la distribution de la variable surconsommation est utilisée. Cette modélisation est calibrée pendant la phase d'apprentissage et caractérise la distribution des surconsommations.

Le score $p_1$ correspond à la puissance d'un test sur la surconsommation, c'est-à-dire la probabilité d'être en surconsommation en cas de surconsommation constatée par les mesures et le modèle.

Le procédé de suivi tel que décrit permet de détecter la présence de surconsommation en utilisant trois paramètres utilisateurs:

- une fenêtre temporelle glissante de surconsommation $t_{W1}$, par exemple sur d'une durée de 24 heures, cette fenêtre glissante contenant toutes les informations horaires sur la durée de la fenêtre.
- un seuil de surconsommation $D_w$, par exemple un niveau de 300 kilowatt

- un seuil de déclenchement d'alarme $s_{p1}$, c'est-à-dire une valeur entre 0 et 1 permettant de déclencher une alarme à partir de la valeur d'un score, par exemple un niveau de 0,5.

Le diagnostic de surconsommation est établi toutes les heures, à partir des paramètres décrits ci-dessus.

Concernant le diagnostic d'invalidité du modèle M, ce diagnostic se base sur le second score $p_2$, qui constitue un indicateur d'invalidité pour avertir l'utilisateur lorsque le modèle utilisé et calibré sur une base d'apprentissage donnée devient inadéquat par rapport aux données capteurs utilisées pour le diagnostic.

Le second score $p_2$ est une valeur réelle de probabilité comprise entre 0 et 1, la valeur 0 indique que le modèle est applicable en toute confiance, la valeur 1 indique que le modèle à une très forte probabilité de ne pas être applicable.

Le procédé de suivi tel que décrit permet de déterminer si le modèle est valide en utilisant deux paramètres utilisateurs:

- une fenêtre temporelle glissante de surconsommation $t_{w2}$, par exemple sur d'une durée de 24 heures, cette fenêtre glissante contenant toutes les informations horaires sur la durée de la fenêtre.
- un seuil de déclenchement d'alarme $S_{p2}$, c'est-à-dire une valeur entre 0 et 1 permettant de déclencher une alarme à partir de la valeur d'un score, la valeur du seuil $S_{p2}$ étant avantageusement de l'ordre de 0,95 à 0,98.

L'indicateur d'invalidité $p_2$ permet en particulier de vérifier que les données opérationnelles utilisées pour le diagnostic de surconsommation ne sont pas trop éloignées du domaine d'apprentissage.

Si l'utilisateur constate via cet indicateur que les données opérationnelles sont trop longtemps en dehors du domaine d'apprentissage il faut envisager un réapprentissage ou une intervention sur le capteur en cas de dérive du capteur non contrôlée.

Cet indicateur $p_2$ permet donc d'obtenir une information très appréciable sur la validité du modèle par rapport aux diagnostics établis.

Il est à noter que l'indicateur d'invalidité $p_2$ indique qu'il faut recalibrer uniquement lorsque les mesures d'entrée du modèle changent de comportement statistique, et non quand la mesure de puissance consommée change.

Avantageusement, pour permettre à un utilisateur de réaliser un suivi plus précis de l'équipement, la déviation de la consommation de l'équipement E par rapport aux courbes théoriques fournies par le constructeur est calculée, par différence entre ces courbes stockées dans les moyens de stockage 3 et les valeurs mesurées.

En outre, le coût marginal pour chaque compresseur d'une unité industrielle est calculé, cette information permet à un utilisateur d'améliorer le choix d'utilisation de ceux-ci.

Le coût marginal constitue un indicateur de sélection des compresseurs lorsque plusieurs compresseurs sont disponibles sur une même unité industrielle.

Le coût marginal s'exprime comme le coût de compression d'un volume en plus ou en moins autour du point de fonctionnement courant, c'est-à-dire la dérivée de puissance consommée par rapport au débit du gaz.

La puissance électrique consommée s'écrit :

$$W = \frac{QRT_w \ln\left(\dfrac{P_{out}}{P_{in}}\right)}{\eta}$$

avec :

W : Puissance électrique consommée [kW]

Q : Débit du gaz [Nm³/h]

R : 1,0304.10⁻⁴ [kWh/(Nm³.K)]

$T_W$ : Température de l'eau réfrigérante [°K]

$P_{in}$ : Pression d'aspiration, avant le filtre [bar]

$P_{out}$ : Pression de refoulement [bar]

$W_e$ : Estimation de la puissance consommée [kW]

η : Rendement isotherme du compresseur

$η_e$ : estimation du rendement isotherme du compresseur.

L'estimation par le modèle M de la puissance consommée s'écrit :

$$W_e = \frac{QRT_w \ln\left(\dfrac{P_{out}}{P_{in}}\right)}{\eta_e}$$

Selon le mode de réalisation linéaire décrit dans le document FR 2 837 598, l'estimation du rendement isotherme du compresseur est considérée comme une loi linéaire, soit :

$$W_e = \frac{QRT_w \ln\left(\dfrac{P_{out}}{P_{in}}\right)}{AQ + B\dfrac{P_{out}}{P_{in}} + CT_w + D}$$

Le coût marginal s'écrit alors :

$$\frac{dW_e}{dQ} = \frac{W_e}{Q}\left(1 - \frac{AQ}{\eta_e}\right)$$

où $W_e/Q$ est le coût spécifique.

L'inconvénient de cette méthode est la faible précision dans les zones non linéaires du rendement.

Dans le mode de réalisation selon l'invention, une précision améliorée est obtenue par dérivation numérique positive et négative sur le modèle M non linéaire.

L'amélioration de la précision du calcul du coût marginal permet de mieux choisir les bons compresseurs, le coût marginal constituant un meilleur indicateur de sélection.

Comme il va se soi, l'invention ne se limite pas aux formes de réalisations préférentielles décrites ci-dessus, à titre d'exemples non limitatif ; elle en embrasse au contraire toutes les variantes dans le cadre des revendications ci-après.

## Revendications

1. Procédé de suivi des performances d'un équipement industriel (E), dans lequel lors d'une phase d'apprentissage, sur une période de référence :

     - on calibre un modèle (M), destiné à fournir une estimation ($W_e$) de la puissance électrique consommée à partir des valeurs de l'ensemble (F) des paramètres de fonctionnement de l'équipement industriel (E),
     - on calibre la distribution d'une variable aléatoire représentant la surconsommation, c'est-à-dire l'écart entre la mesure de la puissance électrique (W) et la valeur estimée ($W_e$) à partir du modèle (M), et
     lors d'une phase de suivi en temps réel:
     - on mesure un ensemble (F) de paramètres de fonctionnement de l'équipement industriel (E), ainsi que la puissance électrique consommée (W) de l'équipement,
     - on calcule, en temps réel, en utilisant le modèle (M), à partir des valeurs de l'ensemble (F) des paramètres de fonctionnement de l'équipement industriel (E), une estimation ($W_e$) de la grandeur représentant la puissance électrique consommée,
     - on compare l'écart entre la valeur mesurée (W) de la puissance électrique consommée (W) avec la valeur estimée ($W_e$) fournie par le modèle (M), pour obtenir la valeur de la surconsommation.
     - à partir d'un test statistique sur la variable surconsommation, utilisant la distribution de cette variable, on en déduit un score de surconsommation correspondant à une probabilité de surconsommation ($p_1$) et constituant un indicateur de surconsommation,
     - on déclenche une alarme si la probabilité de surconsommation ($p_1$) dépasse un seuil de probabilité de surconsommation ($s_{p1}$) donné.

**2.** Procédé selon la revendication 1, **caractérisé en ce que** le score permettant le calcul de la probabilité de surconsommation ($p_1$) correspond à la puissance d'un test statistique sur la variable surconsommation.

**3.** Procédé selon l'une des revendications 1 et 2, **caractérisé en ce que** la probabilité de surconsommation ($p_1$) correspond à la probabilité que la surconsommation dépasse un seuil donné ($D_w$).

**4.** Procédé selon l'une des revendications 1 à 3, **caractérisé en ce qu'**on calcule, lors de la phase de suivi en temps réel un indicateur d'invalidité ($p_2$) représentant la probabilité de validité ou l'invalidité du modèle (M), à partir des valeurs de l'ensemble (F) des paramètres de fonctionnement de l'équipement industriel (E), l'indicateur d'invalidité ($p_2$) étant calculé à partir d'un score dont les moyens de détermination (8) sont calibrés lors d'une phase d'apprentissage sur une période de référence.

**5.** Procédé selon la revendication 4, **caractérisé en ce qu'**une alarme est déclenchée si l'indicateur d'invalidité ($p_2$) dépasse un seuil de probabilité d'invalidité ($s_{p2}$) donné.

**6.** Procédé selon l'une des revendications 1 à 5 **caractérisé en ce que**, lors de la phase de suivi en temps réel, un indicateur de sélection des équipements est calculé comme le coût marginal de l'équipement, c'est-à-dire l'augmentation de la puissance électrique consommée pour une augmentation unité du débit comprimé au point de fonctionnement actuel, cet indicateur étant calculé par une dérivation numérique sur le modèle (M).

**7.** Procédé selon l'une des revendications 1 à 6, **caractérisé en ce que** l'on prend en compte au moins une fenêtre temporelle glissante ($t_{W1}$, $t_{W2}$) de mesure, contenant des informations mesurées pendant la durée de la fenêtre jusqu'à l'instant courant, pour déterminer la surconsommation et/ou l'invalidité du modèle (M).

**8.** Procédé selon l'une des revendications 1 à 7, **caractérisé en ce que** le modèle est de type non linéaire, comportant en particulier au moins un réseau de neurones ou des outils de régression locale.

**9.** Procédé selon l'une des revendications 1 à 8, **caractérisé en ce que** l'ensemble (F) des variables d'entrée du modèle (M), comprend :

- le débit (Q) du gaz à travers l'équipement (E),
- la pression ($P_{in}$) d'aspiration
- la pression ($P_{out}$) de refoulement,
- la température ($T_w$) de l'eau réfrigérante, et

- la température ($T_G$) du gaz à l'entrée de l'équipement.

**10.** Procédé selon l'une des revendications 1 à 9, **caractérisé en ce que** l'on déclenche une recalibration du modèle en cas d'invalidité.

**11.** Procédé selon l'une des revendications 1 à 10, **caractérisé en ce qu'**il est réalisé à intervalle régulier, en particulier de façon horaire.

**12.** Système (S) comprenant

- des moyens de mesure (2) sur l'équipement (E),
- des moyens de stockage (3) permettent d'enregistrer les données correspondantes,
- des moyens de calcul (4),
- des moyens d'information d'un opérateur (5) et de contrôle,
- des moyens de communication en réseau reliant les composants du système,

**caractérisé en ce qu'**il comprend de plus des moyens pour la mise en oeuvre des étapes d'un procédé selon l'une des revendications 1 à 11.

**Claims**

**1.** Method of tracking the performance of an industrial facility (E), in which during a training phase, over a reference period:

- a model (M) is calibrated, intended to provide an estimate ($W_e$) of the electrical power consumed on the basis of the values of the set (F) of operating parameters of the industrial facility (E),
- the distribution of a random variable representing the overconsumption, that is to say the deviation between the measurement of the electrical power (W) and the value estimated ($W_e$) on the basis of the model (M), is calibrated and during a real-time tracking phase:
- a set (F) of operating parameters of the industrial facility (E) and also the facility's electrical power consumed (W) are measured,
- an estimate ($W_e$) of the quantity representing the electrical power consumed is calculated, in real time, by using the model (M), on the basis of the values of the set (F) of operating parameters of the industrial facility (E),
- the deviation between the measured value (W) of the electrical power consumed (W) is compared with the estimated value ($W_e$) provided by the model (M), to obtain the value of the overconsumption,

- on the basis of a statistical test on the overconsumption variable, using the distribution of this variable, an overconsumption score corresponding to an overconsumption probability ($p_1$) and constituting an overconsumption indicator is deduced therefrom,
- an alarm is triggered if the overconsumption probability ($p_1$) exceeds a given overconsumption probability threshold ($s_{p1}$).

2. Method according to Claim 1, **characterized in that** the score allowing the calculation of the overconsumption probability ($p_1$) corresponds to the power of a statistical test on the overconsumption variable.

3. Method according to one of Claims 1 and 2, **characterized in that** the overconsumption probability ($p_1$) corresponds to the probability that the overconsumption exceeds a given threshold (Dw).

4. Method according to one of Claims 1 to 3, **characterized in that**, during the real-time tracking phase, an invalidity indicator ($p_2$) representing the probability of validity or the invalidity of the model (M) is calculated on the basis of the values of the set (F) of operating parameters of the industrial facility (E), the invalidity indicator ($p_2$) being calculated on the basis of a score whose means of determination (8) are calibrated during a phase of training over a reference period.

5. Method according to Claim 4, **characterized in that** an alarm is triggered if the invalidity indicator ($p_2$) exceeds a given invalidity probability threshold ($s_{p2}$).

6. Method according to one of Claims 1 to 5 **characterized in that**, during the real-time tracking phase, an indicator for selecting the facilities is calculated as the marginal cost of the facility, that is to say the increase in the electrical power consumed for a unit increase in the compressed flowrate at the current operating point, this indicator being calculated by a numerical differentiation on the model (M).

7. Method according to one of Claims 1 to 6, **characterized in that** at least one sliding measurement time window ($t_{W1}$, $t_{W2}$), containing information measured for the duration of the window up to the current instant, is taken into account to determine the overconsumption and/or the invalidity of the model (M).

8. Method according to one of Claims 1 to 7, **characterized in that** the model is of nonlinear type, comprising in particular at least one neural net or tools for local regression.

9. Method according to one of Claims 1 to 8, **characterized in that** the set (F) of input variables of the model (M), comprises:

- the flowrate (Q) of the gas through the facility (E),
- the suction pressure ($P_{in}$)
- the discharge pressure ($P_{out}$),
- the temperature ($T_W$) of the refrigerating water, and
- the temperature ($T_G$) of the gas at the inlet of the facility.

10. Method according to one of Claims 1 to 9, **characterized in that** a recalibration of the model is triggered in the event of invalidity.

11. Method according to one of Claims 1 to 10, **characterized in that** it is carried out at regular intervals, in particular hourly.

12. System (S) comprising:

- means (2) for measurement on the facility (E),
- storage means (3) making it possible to record the corresponding data,
- calculation means (4),
- means for informing an operator (5) and for monitoring,
- networked communication means linking the components of the system,

**characterized in that** it moreover comprises means for implementing the steps of a method according to one of Claims 1 to 11.

**Patentansprüche**

1. Verfahren zur Überwachung der Betriebsleistungen einer Industrieanlage (E), bei dem während einer Schulungsphase in einem Bezugszeitraum:

- ein Modell (M) kalibriert wird, das eine Schätzung ($W_e$) der elektrischen Leistungsaufnahme anhand der Werte der Gesamtheit (F) der Betriebsparameter der Industrieanlage (E) liefern soll,
- die Verteilung einer zufälligen Variablen kalibriert wird, die den Mehrverbrauch darstellt, das heißt den Abstand zwischen der Messung der elektrischen Leistung (W) und dem geschätzten Wert ($W_e$) anhand des Modells (M), und während einer Phase der Überwachung in Echtzeit:
- eine Gesamtheit (F) von Betriebsparametern der Industrieanlage (E) sowie die elektrische Leistungsaufnahme (W) der Anlage gemessen wird,
- unter Verwendung des Modells (M) anhand der Werte der Gesamtheit (F) der Betriebsparameter der Industrieanlage (E) in Echtzeit eine Schätzung ($W_e$) der Größe berechnet wird, die die elektrische Leistungsaufnahme darstellt,
- der Unterschied zwischen dem gemessenen Wert (W) der elektrischen Leistungsaufnahme (W) und dem von dem Modell (M) gelieferten geschätzten Wert ($W_e$) verglichen wird, um den Wert des Mehrverbrauchs zu erhalten.
- ausgehend von einem statistischen Test der Mehrverbrauchsvariablen unter Verwendung der Verteilung dieser Variablen davon eine Bewertungsziffer des Mehrverbrauchs, die einer Mehrverbrauchswahrscheinlichkeit ($p_1$) entspricht und einen Indikator des Mehrverbrauchs darstellt, abgeleitet wird,
- ein Alarm ausgelöst wird, wenn die Mehrverbrauchswahrscheinlichkeit ($p_1$) einen gegebenen Schwellenwert der Mehrverbrauchswahrscheinlichkeit ($s_{p1}$) überschreitet.

2. Verfahren nach Anspruch 1, **dadurch gekennzeichnet, dass** die Bewertungsziffer, mit der die Berechnung der Mehrverbrauchswahrscheinlichkeit ($p_1$) möglich ist, der Leistung eines statistischen Tests der Mehrverbrauchsvariablen entspricht.

3. Verfahren nach einem der Ansprüche 1 oder 2, **dadurch gekennzeichnet, dass** die Mehrverbrauchswahrscheinlichkeit ($p_1$) der Wahrscheinlichkeit entspricht, dass der Mehrverbrauch einen gegebenen Schwellenwert (Dw) überschreitet.

4. Verfahren nach einem der Ansprüche 1 bis 3, **dadurch gekennzeichnet, dass** während der Phase der Überwachung in Echtzeit anhand der Werte der Gesamtheit (F) der Betriebsparameter der Industrieanlage (E) ein Ungültigkeitsindikator ($p_2$) berechnet wird, der die Wahrscheinlichkeit der Gültigkeit oder Ungültigkeit des Modells (M) darstellt, wobei der Ungültigkeitsindikator ($p_2$) anhand einer Bewertungsziffer berechnet wird, deren Bestimmungsmittel (8) während einer Schulungsphase in einem Bezugszeitraum kalibriert werden.

5. Verfahren nach Anspruch 4, **dadurch gekennzeichnet, dass** ein Alarm ausgelöst wird, wenn der Ungültigkeitsindikator ($p_2$) einen gegebenen Schwellenwert für die Ungültigkeitswahrscheinlichkeit ($s_{p2}$) überschreitet.

6. Verfahren nach einem der Ansprüche 1 bis 5, **dadurch gekennzeichnet, dass** während einer Phase der Überwachung in Echtzeit ein Indikator für die Auswahl der Einrichtungen berechnet wird, wie zum Beispiel die Grenzkosten der Anlage, das heißt die Erhöhung der elektrischen Leistungsaufnahme für eine Erhöhung der Einheit der komprimierten Leistung am gegenwärtigen Betriebspunkt, wobei dieser Indikator durch eine zahlenmäßige Abweichung am Modell (M) berechnet wird.

7. Verfahren nach einem der Ansprüche 1 bis 6, **dadurch gekennzeichnet, dass** mindestens ein gleitendes Messzeitfenster ($t_{W1}$, $t_{W2}$), das Informationen enthält, die während der Dauer des Fensters bis zu dem laufenden Moment gemessen werden, berücksichtigt wird, um den Mehrverbrauch und/oder die Ungültigkeit des Modells (M) zu bestimmen.

8. Verfahren nach einem der Ansprüche 1 bis 7, **dadurch gekennzeichnet, dass** das Modell nicht-linearen Typs ist und insbesondere mindestens ein Neuronennetz oder Werkzeuge der lokalen Regression aufweist.

9. Verfahren nach einem der Ansprüche 1 bis 8, **dadurch gekennzeichnet, dass** die Gesamtheit (F) der Eingangsvariablen des Modells (M) Folgendes aufweist:

   - der Durchfluss (Q) des Gases durch die Anlage (E),
   - den Saugdruck ($P_{in}$)
   - den Förderdruck ($P_{out}$),
   - die Temperatur ($T_w$) des Kühlwassers, und
   - die Temperatur ($T_G$) des Gases am Eingang der Anlage.

10. Verfahren nach einem der Ansprüche 1 bis 9, **dadurch gekennzeichnet, dass** im Falle der Ungültigkeit eine Rekalibrierung des Modells ausgelöst wird.

11. Verfahren nach einem der Ansprüche 1 bis 10, **dadurch gekennzeichnet, dass** es in regelmäßigen Abständen, insbesondere stündlich, durchgeführt wird.

12. System (S), aufweisend:

   - Messmittel (2) in der Anlage (E),
   - Speichermittel (3) zum Eintragen der entsprechenden Daten,
   - Berechnungsmittel (4),
   - Mittel zur Information eines Bedieners (5) und zur Überwachung,
   - Mittel zur Kommunikation im Netz, das die Elemente des Systems verbindet,

   **dadurch gekennzeichnet, dass** es außerdem Mittel zur Durchführung der Schritte eines Verfahrens nach einem der Ansprüche 1 bis 11 aufweist.

**FIG1**

**FIG2**

FIG3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

*   FR 2837598